# EUROPEAN PATENT SPECIFICATION

(11) **EP 3 352 999 B1**
(45) Date of publication and mention of the grant of the patent: **31.07.2019**
(21) Application number: 16787562.4
(22) Date of filing: 13.09.2016
(51) Int. Cl.: B60C 11/00, B60C 11/03, B60C 3/04

(54) **MOTORCYCLE TYRE**
MOTORRADREIFEN
PNEU DE MOTOCYCLETTE

(30) Priority: 21.09.2015 IT UB20153767
(43) Date of publication of application: 01.08.2018
(73) Proprietor: Pirelli Tyre S.p.A., 20126 Milano (IT)
(72) Inventor: BARBOZA DE SANTANA, Samuel, 09111-000 Santo André (BR); VERCESI, José Ricardo, 09111-000 Santo André (BR); DONIZETI CORSI, Cassio, 09111-000 Santo André (BR); GUERRA MUNIZ, Fabio, 09111-000 Santo André (BR)
(74) Representative: Fabiano, Piero
(86) International application number: PCT/IB2016/055437
(87) International publication number: WO 2017/051280

(56) References cited:
- EP-A1- 2 789 480
- EP-A2- 2 492 116
- JP-A- 2002 036 812
- US-A1- 2012 118 456

## Description

### Field of the invention

The present invention relates to a motorcycle tyre. In particular, the present invention relates to a tyre intended to be fitted to wheels of motorcycles having medium-small engine capacity (e.g. 150 cm³ or higher), and/or medium power (e.g. 50-80 hp) generally used in geographical areas often characterized by uneven and rough roads.

### Prior art

Motorcycle tyres are known from US4112994, EP1884377 and EP2492116.

### Summary of the invention

In recent years, it is being observed that motorcycles having small or medium engine capacity and/or medium-low power are becoming increasingly widespread in emerging markets located in tropical or sub-tropical geographical areas with hot climates and characterized by heavy rainfall.

In these geographical areas roads can be bumpy and uneven, e.g. with holes, hollow and/or protruding portions. In order to be able to face these conditions, tyres intended for this use are usually required to have excellent strength features, also taking into account the overload to which the motorcycles, and thus their tyres, can be subjected, and high mileage. Moreover, the Applicant has observed that in this kind of markets consumers require motorcycle tyres which may travel many kilometers before being replaced. The Applicant believes that an increase in the mileage of a tyre is very hardly achievable by acting only on the tread band, particularly if it is desired to maintain high safety features in every condition of use. The Applicant has therefore faced the problem of providing motorcycle tyres intended to be fitted to the rear wheel of a motorcycle which are structurally simple, and therefore inexpensive, have excellent strength features, suitable for use on bumpy and uneven roads and with overloaded motorcycles, and at the same time provide high mileage. The Applicant has focused his efforts to achieve such an improvement by making a tyre with a conventional carcass structure, having an innovative profile adapted to provide a footprint area with a limited extension in the circumferential direction, which synergistically cooperates with the distribution and arrangement of the grooves of the tread band. In a first aspect thereof, the invention relates to a motorcycle tyre intended to be fitted to the rear wheel of a motorcycle, comprising:
- a carcass structure comprising at least one first and at least one second radially superimposed carcass plies, each of said carcass plies comprising a plurality of reinforcing elements arranged parallel to one another; said at least one first and at least one second carcass plies being mutually crossed so that the reinforcing elements of a first ply are inclined relative to the reinforcing elements of the second carcass ply, and to the equatorial plane;
- a tread band radially superimposed on the first and the second carcass plies;
- said tread band extending by a determined length in axial direction and comprising a central portion located across the equatorial plane and two lateral portions opposed to each other relative to the central portion;
- the central portion extending in axial direction by a width greater than or equal to 20% of the width of the tread band; each lateral portion having a width smaller than or equal to 40% of the width of said tread band;
- said tread band comprising a plurality of grooves;
- said central portion having a void-to-rubber ratio smaller than 4%;
- the profile of a cross section of the tyre at the central portion comprising at least one first bending radius greater than or equal to 60 mm;
- the profile of a cross section of the tyre at each lateral portion comprising at least one second bending radius smaller than or equal to 50 mm.

The Applicant has made a tyre having a conventional structure, thus adapted to provide strength to the tyre, which is structurally simple and inexpensive to manufacture. The tyre which has been made is further provided with a profile having a curvature with a variable bending radius, which, as compared to the tyres according to the prior art, increases in the central portion, so as to create a less rounded central region, and, finally, is provided with a tread band with grooves arranged so as to ensure draining without structurally weakening the tread band, particularly at the central portion.

In the Applicant's opinion, in fact, a less rounded, i.e. flatter, tread band central region results in a substantial modification both in the size and proportion of the footprint area on the ground, which turns out to be shorter and wider than that of the tyres according to the prior art.

Generally speaking, the Applicant believes the wear of a compound is caused by the slipping occurring when the compound gets out of the footprint area while the tyre is rolling on the asphalt; therefore, the dimensions and shape of the footprint area (contact area with the asphalt) directly affect the compound wear. A shorter footprint, such as that obtained with the tyre according to the present invention, involves lower heating, less slipping and thus less wear of the compound itself.

The tyre according to the present invention is provided with a tread band central portion characterized by a low void-to-rubber ratio.

The Applicant believes that a low void-to-rubber ratio in the central portion on one hand provides a suitable stiffness to this tread band portion, and on the other hand contributes to keeping the profile of the inflated tyre more flattened at the equatorial plane.

By the expression module of the tread pattern it is meant a portion of the tread pattern which is repeated the same in succession along the whole circumferential development of the tread band itself. The modules, while keeping the same pattern configuration, may however have different circumferential lengths.

By "tread pattern" it is meant the representation of each point of the tread band (grooves included) on a plane perpendicular to the equatorial plane of the tyre and tangent to the maximum diameter of the tyre.

Angular measurements, and/or linear quantities (distances, widths, lengths, etc.), and/or areas are to be intended as referred to the tread patter as defined above.

In particular, by width of the tread band it is meant the width of the development of the tread band itself on said plane.

Moreover, referring to the angular arrangement of the grooves formed in the tread band relative to the equatorial plane of the tyre, such an angular arrangement is to be intended, for each point of the groove, as referring to the angle (between 0° and 90° in absolute value) formed by a rotation made starting from the equatorial plane up to the direction tangent to the groove passing through that point.

By the expression "substantially straight segments" segments are meant which are arranged according to straight lines over at least 80% of their extension.

By "motorcycle tyre" it is meant a tyre having a high curvature ratio (typically greater than 0.2), which allows high camber angles to be reached when the motorcycle runs on a bend.

By "equatorial plane" of the tyre it is meant a plane perpendicular to the rotation axis of the tyre and dividing the tyre into two equal portions.

By "circumferential" direction it is meant a direction generically directed according to the rotation direction of the tyre, or in any case only slightly inclined relative to the rotation direction of the tyre.

By "void-to-rubber ratio" it is meant the ratio between the total area of the grooves of a determined portion of the tread pattern of the tyre (possibly of the whole tread pattern) and the total area of the same portion of the tread pattern (possibly of the whole tread pattern).

By "curvature ratio" of the tyre it is meant the ratio between the distance of the radially highest point of the tread band from the maximum width or maximum chord of the tyre, and the same maximum width of the tyre, in a cross section of the tyre.

By "bending radius" of a portion of the profile of the tyre cross section it is meant the radius of the circumference that best fits such portion of the profile.

The present invention, in one or more preferred aspects thereof, may comprise one or more of the features hereinafter presented.

Preferably, each lateral portion may have a void-to-rubber ratio equal to or greater than 15%.

For increasing the grip to the ground the central portion may advantageously comprise an annular central portion located across the equatorial plane axially extending over no more than 15% of the width of the tread band and having a void-to-rubber ratio equal to or smaller than 1%.

Conveniently, the first bending radius may be comprised in the range between 70 and 100 mm.

Conveniently, the second bending radius at a lateral portion is greater than 35 mm.

Preferably, the second bending radius may be comprised in the range between 40 and 45 mm.

Advantageously, the central portion may extend in axial direction by a width smaller than 35% of the width of the tread band.

Conveniently each lateral portion may extend in axial direction by a width greater than 20% of the width of the tread band.

Preferably, the tread band comprises a module repeated along a direction of circumferential development of the tyre, comprising:
- at least one first pair of first grooves, oppositely inclined relative to the equatorial plane of the tyre;
- at least one second pair of second grooves oppositely inclined relative to the equatorial plane of the tyre;
- the first pair of first grooves being located circumferentially alternated with the second pair of second grooves.

Preferably, the first grooves of the first pair are mutually circumferentially staggered and the second grooves of the second pair are mutually circumferentially staggered and circumferentially staggered relative to the first grooves of the first pair.

Advantageously, the first grooves of the first pair extend from said central portion axially away from the equatorial plane gradually reducing the inclination relative to the equatorial plane so as to define an inclination angle substantially comprised between 12° and 35° at a transition region between the central portion and the respective lateral portion.

Conveniently, the first grooves of the first pair may comprise, moving axially away from the equatorial plane of the tyre, at least two substantially straight and substantially consecutive segments, wherein the first segment has an inclination suitable to define an angle smaller than or equal to 35° with the equatorial plane.

Preferably, the second grooves of the second pair of second grooves may comprise, moving axially away from the equatorial plane of the tyre, at least two substantially straight and substantially consecutive segments, wherein the first segment has an inclination suitable to define an angle smaller than or equal to 40° with the equatorial plane.

Advantageously, the first grooves lack mutual intersection points and intersection points with the second grooves.

Conveniently, for making draining easier, the module may comprise at least one pair of third grooves oppositely inclined relative to the equatorial plane of the tyre; the third grooves extend in the lateral portions of the tread band.

Preferably, the third grooves lack mutual intersection points and intersection points with the first and the second grooves.

### Brief description of the drawings

Further features and advantages of the invention shall become clearer from the detailed description of some preferred, although not exclusive, embodiments of a tyre intended to be fitted to the rear wheel of a motorcycle, according to the present invention.

Such description shall be made hereafter with reference to the accompanying drawings, provided only for indicating, and thus non-limiting, purposes, wherein:
- figure 1 shows a perspective view of a first example of a tyre according to the invention, intended to be fitted to the rear wheel of a motorcycle;
- figure 2a is an enlarged view of a cross section of a tyre according to the prior art;
- figure 2b is an enlarged view of a cross section of a tyre according to the present invention;
- figure 3 is schematic plan view of the tread band of the tyre of figure 1.

### Detailed description of embodiments of the invention

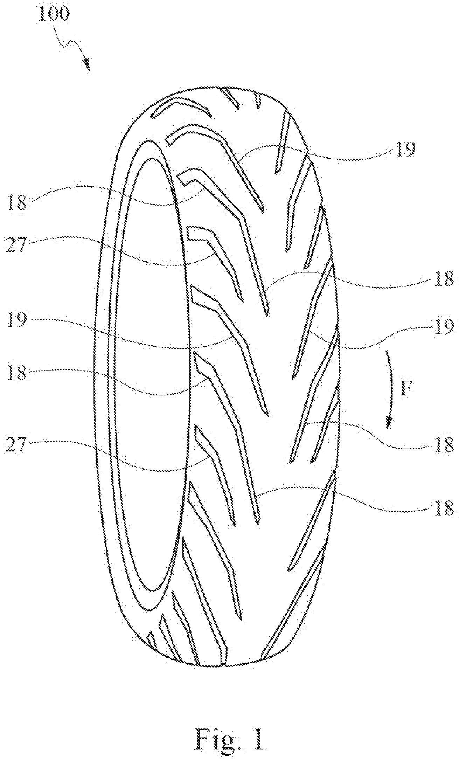

In figure 1, a tyre for motorcycle wheels according to the present invention is generally indicated at 100. The tyre is preferably intended to be used on a rear wheel of a motorcycle with medium-small engine capacity, e.g. 250cc.

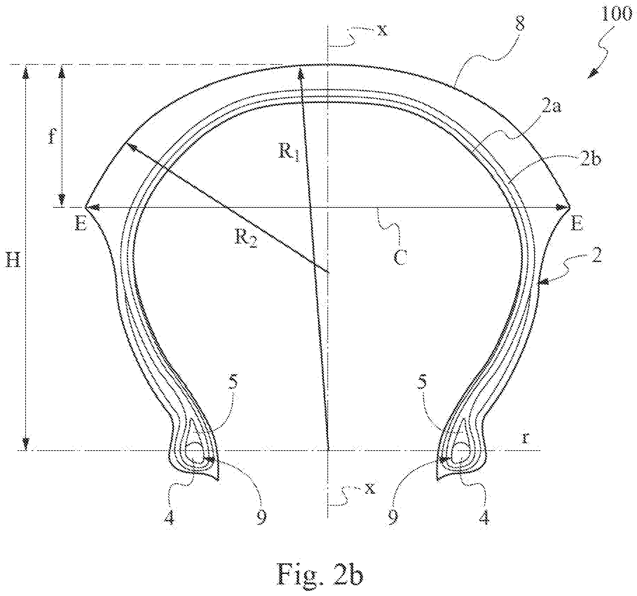

Referring to figure 2b, an equatorial plane X-X and a rotation axis Z (not shown in the figures) are defined in the tyre 100. Moreover, there are defined a circumferential direction (indicated in the figures by an arrow F pointing in the rotation direction of the tyre) and an axial direction, perpendicular to the equatorial plane X-X and to the circumferential direction.

The tyre 100 comprises a carcass structure 2 including at least one first carcass ply 2a and one second carcass ply 2b, radially superimposed on each other, each made of an elastomeric material and comprising a plurality of reinforcing elements arranged parallel to one another.

The first carcass ply 2a and the second carcass ply 2b engage, by means of their opposite circumferential edges, also superimposed on each other, at least one annular reinforcing structure 9.

In particular, the opposite lateral edges of the carcass plies 2a, 2b are turned up about annular reinforcing structures, called bead rings 4.

A tapered elastomeric filling 5 taking up the space defined between the carcass plies 2a, 2b and the respective turned-up lateral edge of the carcass plies 2a, 2b is applied onto the axially outer perimeter edge of the bead rings 4.

As known, the tyre region comprising the bead ring 4 and the filling 5 forms the so-called bead, intended for anchoring the tyre to a respective fitting rim, not shown.

The carcass plies are radially superimposed so that the reinforcing elements of a ply are inclined relative to the reinforcing elements of the carcass plies which are radially superimposed and to the equatorial plane X-X.

With reference to the embodiment shown in figure 2b, in the carcass structure 2 the second carcass ply 2b is radially superimposed on the first carcass ply 2a.

In the first carcass ply 2a the reinforcing elements are arranged so as to form an angle comprised in the range between 20° and 60°, preferably between 25° and 50°, for example 30°, with the equatorial plane X-X.

In the second carcass ply 2b the reinforcing elements are arranged so as to form an angle comprised in the range between 20° and 60°, preferably between 25° and 50°, for example 30°, with the equatorial plane X-X. The reinforcing elements of the second carcass ply 2b are oppositely arranged relative to the reinforcing elements of the first carcass ply 2a, in other words they are inclined by the same angle relative to the equatorial plane X-X, but have an opposite orientation.

The reinforcing elements included in the carcass plies 2a, 2b preferably comprise textile cords, selected from those usually adopted in the manufacture of carcasses for tyres, for example nylon, rayon, PET, PEN cords, with an elementary thread having a diameter of between 0,35 mm and 1,5 mm.

With reference to the embodiment shown in figures 1, 2b, 3, in a radially outer position relative to the carcass structure 2 the tyre 100 does not have a belt structure.

A tread band 8 is circumferentially applied onto the carcass structure 2. Longitudinal and/or transverse grooves, arranged so as to define a desired tread pattern, are typically formed in the tread band 8 further to a molding operation carried out at the same time with the vulcanization of the tyre.

The tyre 100 may comprise a pair of sidewalls laterally applied on axially opposite sides to said carcass structure 2.

The tyre 100 has a cross section characterized by a high transverse curvature.

In particular, the tyre 100 has a section height H measured, at the equatorial plane, between the top of the tread band and the fitting diameter, identified by a reference line r, passing through the tyre beads.

The tyre 100 further has a width C defined by the distance between the laterally opposite ends E of the tread itself, and a curvature defined by the specific value of the ratio between the distance f of the top of the tread from the line passing through the ends E of the tread itself, measured at the equatorial plane of the tyre, and the aforesaid width C. The ends E of the tread may be formed by a corner.

In the present description and in the subsequent claims, by high curvature tyres, tyres are meant which have a curvature ratio f/C not smaller than 0.2, preferably f/C ≥ 0.25, for example equal to 0.28. Preferably, f/C ≤ 0.5.

Preferably, the tyres have particularly low sidewalls (fig. 2b). In other words, by tyres with low or lowered sidewalls, tyres are meant in which the sidewall height ratio (H-f)/H is smaller than about 0.7, more preferably smaller than about 0.65, for example equal to about 0.5.

The carcass structure 2 is typically lined on its inner walls with a sealing layer, or so-called "liner", essentially consisting of a layer of an airtight elastomeric material, adapted to ensure the tight seal of the tyre itself after it has been inflated.

Still referring to the embodiment shown in figures 1, 2b and 3, the tyre preferably intended to be fitted to the rear wheel of a motorcycle comprises a central portion L1 located across the equatorial plane X-X and two lateral portions L2, L3 opposed to each other relative to the central portion L1.

Preferably, the central portion L1 extends in axial direction by a width greater than 20% of the width L of the tread band 8. The central portion L1 extends in axial direction by a width smaller than 35% of the width L of the tread band 8. As an example, referring to the tyre of figures 1, 2b, 3, the central portion L1 extends over about 30% of the width L of the tread band 8.

Each lateral portion L2, L3 has a width smaller than 40% of the width L of the tread band 8. Preferably, each lateral portion L2, L3 has a width greater than 30% of the width L of the tread band 8.

As better shown in figure 2b, the rear tyre according to an embodiment of the present invention, inflated to a pressure of about 2 bars, has a profile having a curvature with a variable bending radius, which, as compared to the tyres according to the prior art, increases so as to form a less rounded central region.

In other words, the tyre is characterized by a flattened profile at the central portion L1.

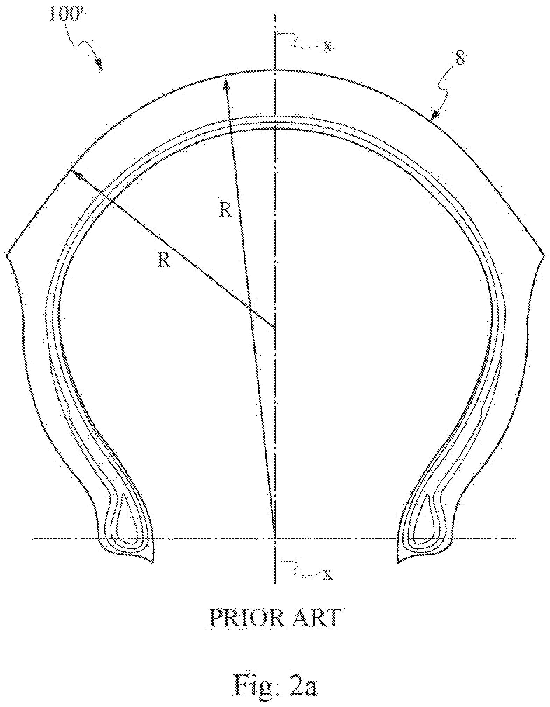

By way of example and comparison, in figure 2a a cross section of a tyre 100' according to the prior art is shown.

For detecting the corresponding profiles, both tyres, i.e. the tyre according to the prior art, shown in figure 2a, and the tyre according to the invention, shown in figure 2b, were fitted to a standard ETRTO rim, inflated to the operating pressure indicated by the manufacturer, e.g. a pressure of 2.9 bars, and subjected to a laser scan by means of suitable laser profilometers.

The tyre 100' according to the prior art is a tyre intended to be fitted to the rear wheel of a motorcycle intended substantially for the same use and having the same size.

Moreover, the tyre 100' according to the prior art has the same carcass structure as the tyre according to the invention. However, as shown in figure 2a, it has a cross section profile characterized by variable bending radiuses R, with a more rounded or convex central portion.

As shown in figure 2a, the cross section profile of the tyre 100' according to the prior art is in fact characterized by bending radiuses R whose values increase moving from the lateral portions L2, L3 towards the central portion L1, and further, within the central portion L1, from the edges of the latter towards the equatorial plane, where they reach their maximum value.

In detail, the bending radiuses R of the cross section profile of the tyre 100' according to the prior art in each lateral portion L2, L3 have values comprised in the range between about 30 mm and 40 mm. The bending radiuses R then further slightly increase in the central portion L1, reaching a value in the range between 40 and 50 mm.

Such bending radiuses result in an appreciably rounded or convex profile at the central portion L1.

On the contrary, the bending radiuses of the cross section profile of the tyre 100 according to the present invention, as shown in figure 2b, have values which increase moving from the lateral portions L2, L3 towards the central portion L1, and further moving from the edges of the latter towards the equatorial plane X-X, where they reach their maximum value. However, the curvature increase in the central portion L1 is appreciably greater than in the tyre according to the prior art.

In detail, while in each lateral portion L2, L3 the tyre profile is characterized by bending radiuses R2 whose values are comprised in the range between about 30 mm and 40 mm, in the central portion L1 the tyre profile is characterized by bending radiuses R1 substantially greater than 60 mm and preferably comprised in the range between 70 and 100 mm.

Such curvature radiuses thus result in a less rounded, i.e. flatter, profile at the central portion L1. This, in turn, results in a substantial modification in both the size and proportion of the footprint area on the ground, which thus will be shorter and wider than that of the tyres according to the prior art.

Such flattened profile in the central portion is obtained by means of a predetermined geometry of the mould, which is made with a profile with large bending radius at its central portion, corresponding to the portion L1 of the tyre, in combination with the angular direction of deposition of the carcass reinforcing elements in the crown region.

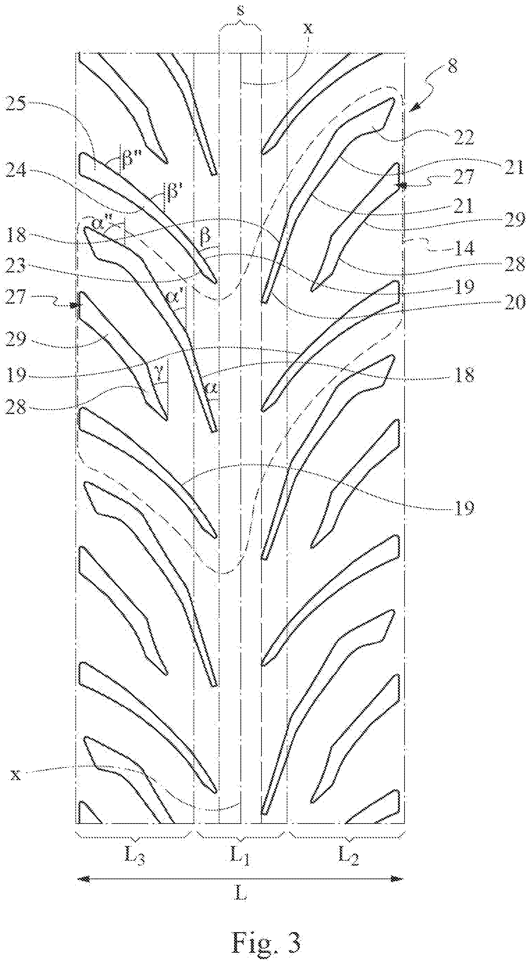

An embodiment of the tread band of the tyre according to the present invention is shown in figure 3. As shown in figure 3, a tread pattern is formed in the tread band 8, said tread pattern comprising a plurality of grooves, which, for ensuring good draining features, define on the tread band 8 overall a void-to-rubber ratio greater than 4%.

The tread pattern comprises a module 14 repeated along a direction of circumferential development of the tyre. The module 14 is repeated 13 times at most along the circumferential development of the tyre. Preferably, it is repeated 10 times at most, e.g. 7 times.

The module 14 has a pair of first grooves 18 oppositely inclined relative to the equatorial plane X-X and a second pair of second grooves 19 oppositely inclined relative to the equatorial plane X-X of the tyre as well.

The first 18 and the second 19 grooves have a significant extension. In particular, each first and second groove extends axially away from the equatorial plane X-X by at least 20% of the width L of the tread band 8.

As better shown in figure 3, the first 18 and second 19 grooves of the first and second pairs are arranged so as to form an annular central portion s across the equatorial plane X-X, extending over no more than 15% of the width L of the tread band, preferably over no less than 5% of the width L of the tread band, and having a void-to-rubber ratio equal to or smaller than 1%.

The Applicant, in fact, has observed that in this kind of motorcycles draining is mainly carried out by the front tyre and by the tread band portion of the rear tyre most spaced away from the equatorial plane X-X.

The Applicant has further found that for this kind of tyres a most central portion across the equatorial plane X-X is required which has a suitable stiffness, and thus preferably has no grooves. A small number of grooves, or even the lack of them, at the most central portion of the tread band 8, in fact, contributes to keeping the profile of the inflated tyre more flattened at the equatorial plane X-X.

Referring to the embodiment shown in figures 1, 3, the annular central portion s can be identified as the distance, in axial direction, between two free ends 30, 31 of either the first pair of first grooves 18 or the second pair of second grooves 19, whichever is shorter.

Referring to the embodiment shown in figures 1-3, it can be seen that the first pair of first grooves 18 is arranged circumferentially alternated with the second pair of second grooves 19.

Preferably the first grooves 18 of the first pair are mutually circumferentially staggered and the second grooves 19 of the second pair are mutually circumferentially staggered and circumferentially staggered relative to the first grooves 18 of the first pair.

The first grooves 18 of the first pair extend from said central portion L1 axially away from the equatorial plane X-X gradually reducing the inclination relative to the equatorial plane X-X so as to define, at a transition region between the central portion L1 and the respective lateral portion L2 or L3, an inclination angle relative to the circumferential direction substantially comprised between 12° and 35°.

The gradual reduction of the inclination of the first grooves 18 while moving away from the equatorial plane causes them to be arranged so as to be parallel to and/or to coincide with the wear ridges on the tyre according to the Schallamach theory, which describes the mechanics of the formation of wear waves as a function of the lying and direction of the forces exchanged between tyre and asphalt in each point of the profile.

Such an arrangement of the first grooves 18 results in a further wear reduction in the tread band 8.

In detail, with reference to the embodiment shown in figures 1, 3, each first groove 18 comprises, moving axially away from the equatorial plane X-X of the tyre, three straight segments 20, 21, 22.

Considering the tyre shown in figures 1, 3, the first segment 20 has an inclination suitable to define an angle α smaller than or equal to 35°, preferably greater than 10°, for example equal to about 15°, with the equatorial plane X-X.

The second segment 21 has instead an inclination suitable to define an angle α' greater than 15°, preferably smaller than 60°, for example equal to about 30°, with the equatorial plane X-X.

The third segment 22 has an inclination suitable to define an angle α" greater than 30°, preferably smaller than 90°, for example equal to about 60°, with the equatorial plane X-X.

In other words, moving axially away from the equatorial plane X-X along the first groove 18 it can be noticed an appreciable reduction of the inclination of the first groove 18. In fact, the second segment 21 has an inclination relative to the equatorial plane X-X which is smaller than the inclination of the first segment 20, whereas the third segment 22 has an inclination relative to the equatorial plane X-X which is smaller than the inclination of the second segment 21.

The segments 20, 21, 22 of the first grooves 18 may also be arranged non-continuously relative to each other, being it possible for the first groove 18 to have a gap.

Still referring to the embodiment of figure 3, the second grooves 19 of the second pair extend from the central portion L1 axially away from the equatorial plane X-X gradually increasing the inclination relative to the equatorial plane X-X, so as to form an inclination angle substantially of between 30° and 40° at the transition region between the central portion L1 and the respective lateral portion L2 or L3.

The gradual reduction of the inclination of the second grooves 19 while moving away from the equatorial plane, as in the case of the first grooves 18, causes them to be arranged so as to be parallel to and/or to coincide with the wear ridges on the tyre according to the Schallamach theory.

Such an arrangement of the second grooves 19 results in a further wear reduction in the tread band 8.

In detail, still referring to the embodiment shown in figure 3, each second groove 19 comprises, moving axially away from the equatorial plane X-X of the tyre, three substantially consecutive and straight segments 23, 24, 25.

In this particular case the first segment 23 has an inclination suitable to define an angle β smaller than 40°, preferably greater than 20°, for example equal to about 30°, with the equatorial plane X-X.

The second segment 24 has instead an inclination suitable to define an angle β' greater than 30°, preferably smaller than 60°, for example equal to about 45°, with the equatorial plane X-X.

The third segment 25 has an inclination suitable to define an angle β" greater than 45°, preferably smaller than 80°, for example equal to about 60°, with the equatorial plane X-X.

In other words, moving axially away from the equatorial plane X-X along the second groove 19 it can be noticed an appreciable reduction of the inclination of the second groove 19 itself. In fact, the second segment 24 has an inclination relative to the equatorial plane X-X which is smaller than the inclination of the first segment 23, whereas the third segment 25 has an inclination relative to the equatorial plane X-X which is smaller than the inclination of the second segment 24.

Still referring to the embodiment shown in figures 1, 3, it can be seen that each groove 19 is arranged so as to have no intersections either with a first groove 18 or with a second groove 19.

The lack of intersections of the grooves avoids the possible formation of hinges in the tread band 8, which, when the tyre is inflated, may make the latter to take on a more convex profile, resulting in a lengthening of the footprint area, which causes a mileage reduction.

In the embodiment shown in figures 1, 2b, 3 the first and second grooves 18, 19 have a decreasing depth, which gets smaller moving from the equatorial plane X-X towards the shoulders . Preferably, the first and second longitudinal grooves 18, 19 have a depth smaller than or equal to 8 mm.

According to an embodiment shown in figure 3, the first main grooves 18, 19 have a width which increases along their extension, which gets larger moving from the first towards the third segment. Preferably, the first longitudinal grooves 18, 19 have width smaller than or equal to 6 mm.

For ensuring excellent draining features, the tyre according to the present invention has, as described above, a void-to-rubber ratio greater than 4%.

For this purpose, the module 14 may comprise, as in the embodiment shown in figure 3, a pair of third grooves 27.

The third grooves 27 of each pair of third grooves 27 are oppositely located relative to the equatorial plane X-X and circumferentially staggered.

Preferably, the third grooves 27 extend only in the lateral portions L2, L3 of the tread band 8.

Each third groove 27 extends axially away from the equatorial plane X-X over 5% of the width of the tread band 8 at most.

Still referring to the embodiment shown in figures 1-3, it can be seen that the pair of third grooves 27 is circumferentially located between a second groove 19 and a first groove 18 so as to have no intersections with either a first groove 18 or a second groove 19.

The lack of intersections of the grooves avoids the possible formation of hinges in the tread band 8, which, when the tyre is inflated, may make the latter to take on a more convex profile, resulting in a lengthening of the footprint area, which causes a mileage reduction.

Still referring to the embodiment shown in figure 3, it can be seen that the third grooves 27 comprise, moving axially away from the equatorial plane X-X, at least two substantially straight and substantially consecutive segments 28, 29, wherein the first segment 28 has an inclination suitable to form an angle γ smaller than 35° with the equatorial plane X-X

### Example

The following table 1 shows the results, in terms of mileage, obtained by a sample of a tyre according to the invention (PINV) having size 90/90 - 18 M/C Reinf 51 P to be fitted to a rear wheel of a motorcycle (Honda CG 150), and by a comparison tyre (PCONF) available on the market, model Mandrake™, having the same size and fitted to the rear wheel of the same motorcycle.

The tyre according to the invention PINV is a tyre provided with a so-called conventional carcass structure, with a profile such as that shown in figure 2b, and a tread band such as that shown, for example, in figure3.

The comparison tyre PCONF is instead a tyre provided with the same carcass structure, a tread band having substantially the same overall void-to-rubber ratio, but having a profile according to the prior art, such as that shown in figure 2a.

| Tyre | Initial thickness (mm) | Final thickness (mm) | Wear (mm) | km covered | Coverable km prediction | Wear km/mm |
|---|---|---|---|---|---|---|
| PCONF | 5.06 | 2.20 | 2.86 | 8400 | 100% | 2940 |
| PINV | 5.06 | 2.83 | 2.23 | 8400 | 128% | 3765 |

In particular, the initial thickness of the tread band of the new tyre was measured in mm for both tyres, the same were made to cover about 8400 km, the thickness of the remaining tread band was measured (in mm) and then the thickness of worn tread was obtained (in mm).

A this point, a prediction was made of the kilometers coverable to reach the end of the service life of each tyre and the amount of coverable kilometers for each millimeter of worn tread band and the percent yield were then calculated.

The tyre according to the present invention has a definitely a higher mileage, being able to cover about 1000 km more for each millimeter of tread band, with a 28% greater percent yield.

Many modifications can be made in the embodiments described in detail, still remaining within the scope of protection of the invention, defined by the following claims.

## Claims

1. Motorcycle tyre (100) intended to be fitted to the rear wheel of a motorcycle, comprising:
- a carcass structure (2) comprising at least one first (2a) and at least one second (2b) radially superimposed carcass plies, each comprising a plurality of reinforcing elements arranged parallel to one another; said at least one first (2a) and at least one second (2b) carcass plies being mutually crossed so that the reinforcing elements of a first ply are inclined relative to the reinforcing elements of the second carcass ply, and to an equatorial plane (X-X);
- a tread band (8) radially superimposed on the first (2a) and the second (2b) carcass plies;
- said tread band (8) extending by a length (L) in axial direction and comprising a central portion (L1) located across the equatorial plane (X-X) and two lateral portions (L2, L3) opposed to each other relative to the central portion (L1);
- the central portion (L1) extending in axial direction by a width greater than or equal to 20% of the width (L) of said tread band; each lateral portion (L2, L3) having a width smaller than or equal to 40% of the width L of said tread band (8);
- said tread band (8) comprising a plurality of grooves;
- said central portion (L1) having a void-to-rubber ratio smaller than 4%;
- the profile of a cross section of the tyre at the central portion (L1) comprising at least one first bending radius greater than or equal to 60 mm;
**characterized in that** the profile of a cross section of the tyre at each lateral portion (L2, L3) comprises at least one second bending radius smaller than or equal to 50 mm.

2. Motorcycle tyre (100) according to claim 1, **characterized in that** each lateral portion (L2, L3) has a void-to-rubber ratio equal to or greater than 15%.

3. Motorcycle tyre (100) according to claim 1, **characterized in that** said central portion (L1) comprises an annular central portion (s) located across the equatorial plane (X-X) having a void-to-rubber ratio equal to or smaller than 1%.

4. Motorcycle tyre (100) according to claim 1, **characterized in that** said first bending radius is comprised in the range between 70 and 100 mm.

5. Motorcycle tyre (100) according to claim 1, **characterized in that** said second bending radius is comprised in the range between 40 and 45 mm.

6. Motorcycle tyre according to claim 1, **characterized in that** said central portion (L1) extends in axial direction by a width smaller than 35% of the width (L) of said tread band.

7. Motorcycle tyre according to claim 1, **characterized in that** each lateral portion (L2, L3) extends in axial direction by a width greater than 20% of the width (L) of said tread band.

8. Motorcycle tyre according to claim 1, **characterized in that** said tread band (8) comprises a module (14) repeated along a direction of circumferential development of the tyre, comprising:
- at least one first pair of first grooves (18) oppositely inclined relative to the equatorial plane (X-X) of the tyre;
- at least one second pair of second grooves (19) oppositely inclined relative to the equatorial plane (X-X) of the tyre;
- the first pair of first grooves (18) being located circumferentially alternated with the second pair of second grooves (19).

9. Motorcycle tyre according to claim 8, **characterized in that** the first grooves (18) of the first pair are mutually circumferentially staggered and the second grooves (19) of the second pair are mutually circumferentially staggered and circumferentially staggered relative to the first grooves (18) of the first pair.

10. Motorcycle tyre according to claim 8, **characterized in that** the first grooves (18) of the first pair extend from said central portion axially away from the equatorial plane (X-X) gradually reducing the inclination relative to the equatorial plane (X-X) so as to define an inclination angle substantially comprised between 12° and 35° at a transition region between the central portion and the respective lateral portion.

11. Motorcycle tyre according to any one of claims 8 to 10, wherein the first grooves (18) of the first pair comprise, moving axially away from the equatorial plane (X-X) of the tyre, at least two substantially straight segments (20, 21), wherein the first segment (20) has an inclination suitable to define an angle α ≤ 35° with the equatorial plane (X-X).

12. Motorcycle tyre (100) according to any one of claims 8 to 11, wherein the second grooves (19) of the second pair of second grooves (19) comprise, moving axially away from the equatorial plane (X-X) of the tyre, at least two substantially straight and substantially consecutive segments (23, 24), wherein the first segment (22) has an inclination suitable to define an angle β ≤ 40° with the equatorial plane (X-X).

13. Motorcycle tyre (100) according to any one of claims 8 to 12, wherein the first grooves (18) lack mutual intersection points and intersection points with the second grooves (19).

14. Motorcycle tyre (100) according to any one of claims 8 to 13, wherein said module (14) comprises at least one pair of third grooves (27) oppositely inclined relative to the equatorial plane (X-X) of the tyre; the third grooves (27) extending in the lateral portions (L2, L3).

15. Motorcycle tyre according to claim 14, wherein the third grooves (27) lack mutual intersection points and intersection points with the first (18) and the second (19) grooves.

## Patentansprüche

1. Motorradreifen (100), der auf dem Hinterrad eines Motorrads montiert werden soll, umfassend:
- eine Karkassenstruktur (2) umfassend zumindest eine erste (2a) und zumindest eine zweite (2b) radial übereinandergelegte Karkassenlage, die jeweils eine Vielzahl von Verstärkungselementen umfassen, die parallel zueinander angeordnet sind; wobei die zumindest eine erste (2a) und zumindest eine zweite (2b) Karkassenlage einander überkreuzen, so dass die Verstärkungselemente einer ersten Lage relativ zu den Verstärkungselementen der zweiten Karkassenlage und zu einer Äquatorialebene (X-X) schräg verlaufen;
- einen Laufflächenring (8), der die erste (2a) und die zweite (2b) Karkassenlage radial überlagert;
- wobei der Laufflächenring (8) sich um eine Länge (L) in axialer Richtung erstreckt und einen zentralen Abschnitt (L1), der sich über die Äquatorialebene (X-X) erstreckt, und zwei seitliche Abschnitte (L2, L3) umfasst, die einander relativ zu dem zentralen Abschnitt (L1) gegenüberliegen;
- wobei der zentrale Abschnitt (L1) sich in axialer Richtung um eine Breite erstreckt, die größer als oder gleich 20 % der Breite (L) des Laufflächenrings ist; jeder seitliche Abschnitt (L2, L3) eine Breite aufweist, die kleiner als oder gleich 40 % der Breite L des Laufflächenrings (8) ist;
- der Laufflächenring (8) eine Vielzahl von Nuten umfasst;
- der zentrale Abschnitt (L1) ein Gesamtverhältnis der negativen und positiven Profilanteile von weniger als 4 % aufweist;
- das Profil eines Querschnitts des Reifens an dem zentralen Abschnitt (L1) zumindest einen ersten Krümmungsradius größer als oder gleich 60 mm aufweist;
**dadurch gekennzeichnet, dass**
das Profil eines Querschnitts des Reifens an jedem seitlichen Abschnitt (L2, L3) zumindest einen zweiten Krümmungsradius kleiner als oder gleich 50 mm aufweist.

2. Motorradreifen (100) nach Anspruch 1, **dadurch gekennzeichnet, dass** jeder seitliche Abschnitt (L2, L3) ein Gesamtverhältnis der negativen und positiven Profilanteile gleich oder größer als 15 % aufweist.

3. Motorradreifen (100) nach Anspruch 1, **dadurch gekennzeichnet, dass** der zentrale Abschnitt (L1) einen zentralen ringförmigen Abschnitt (s) umfasst, der über die Äquatorialebene (X-X) angeordnet ist und ein Gesamtverhältnis der negativen und positiven Profilanteile gleich oder kleiner als 1 % aufweist.

4. Motorradreifen (100) nach Anspruch 1, **dadurch gekennzeichnet, dass** der erste Krümmungsradius in dem Bereich zwischen 70 und 100 mm liegt.

5. Motorradreifen (100) nach Anspruch 1, **dadurch gekennzeichnet, dass** der zweite Krümmungsradius in dem Bereich zwischen 40 und 45 mm liegt.

6. Motorradreifen nach Anspruch 1, **dadurch gekennzeichnet, dass** der zentrale Abschnitt (L1) sich in axialer Richtung um eine Breite von weniger als 35 % der Breite (L) des Laufflächenrings erstreckt.

7. Motorradreifen nach Anspruch 2, **dadurch gekennzeichnet, dass** jeder seitliche Abschnitt (L2, L3) sich in axialer Richtung um eine Breite von mehr als 20 % der Breite (L) des Laufflächenrings erstreckt.

8. Motorradreifen nach Anspruch 1, **dadurch gekennzeichnet, dass** der Laufflächenring (8) ein Modul (14) umfasst, das sich entlang einer Richtung der Umfangserstreckung des Reifens wiederholt, umfassend:
- zumindest ein erstes Paar von ersten Nuten (18), die in Bezug auf die Äquatorialebene (X-X) des Reifens entgegengesetzt schräg sind;
- zumindest ein zweites Paar von zweiten Nuten (19), die in Bezug auf die Äquatorialebene (X-X) des Reifens entgegengesetzt schräg sind;
- wobei das erste Paar von ersten Nuten (18) so angeordnet ist, dass es sich in Umfangsrichtung mit dem zweiten Paar von zweiten Nuten (19) abwechselt.

9. Motorradreifen nach Anspruch 8. **dadurch gekennzeichnet, dass** die ersten Nuten (18) des ersten Paars zueinander in Umfangsrichtung versetzt sind, und die zweite Nuten (19) des zweiten Paars zueinander in Umfangsrichtung versetzt und relativ zu den ersten Nuten (18) des ersten Paars in Umfangsrichtung versetzt sind.

10. Motorradreifen nach Anspruch 8, **dadurch gekennzeichnet, dass** die ersten Nuten (18) des ersten Paars sich von dem zentralen Abschnitt axial von der Äquatorialebene (X-X) weg erstrecken, wobei die Schräge in Bezug auf die Äquatorialebene (X-X) schrittweise abnimmt, um an einer Übergangsregion zwischen dem zentralen Abschnitt und dem jeweiligen seitlichen Abschnitt einen Schrägwinkel im Wesentlichen zwischen 12° und 35° zu definieren.

11. Motorradreifen nach einem der Ansprüche 8 bis 10, wobei die ersten Nuten (18) des ersten Paars im Verlauf von der Äquatorialebene (X-X) des Reifens weg zumindest zwei im Wesentlichen gerade Segmente (20, 21) umfassen, wobei das erste Segment (20) eine Schräge aufweist, die geeignet ist, einen Winkel α ≤ 35° mit der Äquatorialebene (X-X) zu definieren.

12. Motorradreifen (100) nach einem der Ansprüche 8 bis 11, wobei die zweiten Nuten (19) des zweiten Paars im Verlauf von der Äquatorialebene (X-X) des Reifens weg zumindest zwei im Wesentlichen gerade Segmente (23, 24) umfassen, wobei das erste Segment (22) eine Schräge aufweist, die geeignet ist, einen Winkel β ≤ 40° mit der Äquatorialebene (X-X) zu definieren.

13. Motorradreifen (100) nach einem der Ansprüche 8 bis 12, wobei die ersten Nuten (18) keine Schnittpunkte miteinander und keine Schnittpunkte mit den zweiten Nuten (19) aufweisen.

14. Motorradreifen (100) nach einem der Ansprüche 8 bis 13, wobei das Modul (14) zumindest ein Paar von dritten Nuten (27) umfasst, die in Bezug auf die Äquatorialebene (X-X) des Reifens entgegengesetzt schräg sind; wobei die dritten Nuten (27) sich in den seitlichen Abschnitten (L2, L3) erstrecken.

15. Motorradreifen nach Anspruch 14, wobei die dritten Nuten (27) keine Schnittpunkte miteinander und keine Schnittpunkte mit den ersten (18) und den zweiten (19) Nuten aufweisen.

## Revendications

1. Pneu de motocycle (100) destiné à être monté sur la roue arrière d'un motocycle, comprenant :
- une structure de carcasse (2) comprenant au moins un premier (2a) et au moins un deuxième (2b) plis de carcasse superposés radialement, comprenant chacun une pluralité d'éléments de renforcement agencés parallèlement les uns aux autres ; lesdits au moins un premier (2a) et au moins un deuxième (2b) plis de carcasse étant mutuellement croisés de sorte que les éléments de renforcement d'un premier pli soient inclinés par rapport aux éléments de renforcement du deuxième pli de carcasse et par rapport à un plan équatorial (X-X) ;
- une bande de roulement (8) superposée radialement aux premier (2a) et deuxième (2b) plis de carcasse ;
- ladite bande de roulement (8) s'étendant sur une longueur (L) dans la direction axiale et comprenant une partie centrale (L1) située dans le plan équatorial (X-X) et deux parties latérales (L2, L3) opposées l'une à l'autre par rapport à la partie centrale (L1) ;
- la partie centrale (L1) s'étendant dans la direction axiale sur une largeur supérieure ou égale à 20% de la largeur (L) de ladite bande de roulement ; chaque partie latérale (L2, L3) ayant une largeur inférieure ou égale à 40% de la largeur L de ladite bande de roulement (8) ;
- ladite bande de roulement (8) comprenant une pluralité de rainures ;
- ladite partie centrale (L1) ayant un rapport vide sur caoutchouc inférieur à 4% ;
- le profil d'une section transversale du pneu au niveau de la partie centrale (L1) comprenant au moins un premier rayon de courbure supérieur ou égal à 60 mm ;
**caractérisé en ce que**
le profil d'une section transversale du pneu au niveau de chaque partie latérale (L2, L3) comprend au moins un deuxième rayon de courbure inférieur ou égal à 50 mm.

2. Pneu de motocycle (100) selon la revendication 1, **caractérisé en ce que** chaque partie latérale (L2, L3) a un rapport vide sur caoutchouc supérieur ou égal à 15%.

3. Pneu de motocycle (100) selon la revendication 1, **caractérisé en ce que** ladite partie centrale (L1) comprend une ou plusieurs partie(s) centrale(s) annulaire(s) située(s) dans le plan équatorial (X-X) ayant un rapport vide sur caoutchouc inférieur ou égal à 1%.

4. Pneu de motocycle (100) selon la revendication 1, **caractérisé en ce que** ledit premier rayon de courbure est compris dans la plage allant de 70 à 100 mm.

5. Pneu de motocycle (100) selon la revendication 1, **caractérisé en ce que** ledit deuxième rayon de courbure est compris dans la plage allant de 40 à 45 mm.

6. Pneu de motocycle selon la revendication 1, **caractérisé en ce que** ladite partie centrale (L1) s'étend dans la direction axiale sur une largeur inférieure à 35% de la largeur (L) de ladite bande de roulement.

7. Pneu de motocycle selon la revendication 1, **caractérisé en ce que** chaque partie latérale (L2, L3) s'étend dans la direction axiale sur une largeur supérieure à 20% de la largeur (L) de ladite bande de roulement.

8. Pneu de motocycle selon la revendication 1, **caractérisé en ce que** ladite bande de roulement (8) comprend un module (14) répété le long d'une direction de développement circonférentiel du pneu, comprenant :
- au moins une première paire de premières rainures (18) inclinées de manière opposée par rapport au plan équatorial (X-X) du pneu ;
- au moins une deuxième paire de deuxièmes rainures (19) inclinées de manière opposée par rapport au plan équatorial (X-X) du pneu ;
- la première paire de premières rainures (18) étant située de manière circonférentielle en alternance avec la deuxième paire de deuxièmes rainures (19).

9. Pneu de motocycle selon la revendication 8, **caractérisé en ce que** les premières rainures (18) de la première paire sont mutuellement décalées de manière circonférentielle et les deuxièmes rainures (19) de la deuxième paire sont mutuellement décalées de manière circonférentielle et décalées de manière circonférentielle par rapport aux premières rainures (18) de la première paire.

10. Pneu de motocycle selon la revendication 8, **caractérisé en ce que** les premières rainures (18) de la première paire s'étendent axialement à partir de ladite partie centrale en s'éloignant du plan équatorial (X-X) en réduisant progressivement l'inclinaison par rapport au plan équatorial (X-X) de manière à définir un angle d'inclinaison sensiblement compris entre 12° et 35° au niveau d'une région de transition entre la partie centrale et la partie latérale respective.

11. Pneu de motocycle selon l'une quelconque des revendications 8 à 10, dans lequel les premières rainures (18) de la première paire comprennent, en s'éloignant axialement du plan équatorial (X-X) du pneu, au moins deux segments sensiblement rectilignes (20, 21), où le premier segment (20) a une inclinaison appropriée pour définir un angle α ≤ 35° par rapport au plan équatorial (X-X).

12. Pneu de motocycle (100) selon l'une quelconque des revendications 8 à 11, dans lequel les deuxièmes rainures (19) de la deuxième paire de deuxièmes rainures (19) comprennent, en s'éloignant axialement du plan équatorial (X-X) du pneu, au moins deux segments (23, 24) sensiblement rectilignes et sensiblement consécutifs, où le premier segment (22) a une inclinaison appropriée pour définir un angle β ≤ 40° par rapport au plan équatorial (X-X).

13. Pneu de motocycle (100) selon l'une quelconque des revendications 8 à 12, dans lequel les premières rainures (18) sont dépourvues de points d'intersection mutuels et de points d'intersection avec les deuxièmes rainures (19).

14. Pneu de motocycle (100) selon l'une quelconque des revendications 8 à 13, dans lequel ledit module (14) comprend au moins une paire de troisièmes rainures (27) inclinées de manière opposée par rapport au plan équatorial (X-X) du pneu ; les troisièmes rainures (27) s'étendant dans les parties latérales (L2, L3).

15. Pneu de motocycle selon la revendication 14, dans lequel les troisièmes rainures (27) sont dépourvues de points d'intersection mutuels et de points d'intersection avec les première (18) et deuxième (19) rainures.
